# EUROPÄISCHE PATENTANMELDUNG

(11) **EP 3 873 175 A1**
(43) Veröffentlichungstag der Anmeldung: **01.09.2021**
(21) Anmeldenummer: 21020074.7
(22) Anmeldetag: 16.02.2021
(51) Int. Cl.: H05B 6/06, H05B 6/36, B29C 65/36

(54) **INDUKTIONSANLAGE; VERFAHREN ZUM BETREIBEN EINER INDUKTIONSANLAGE**

(30) Priorität: 27.02.2020 DE 102020105222
(71) Anmelder: BST Induktion GmbH, 74858 Aglasterhausen (DE)
(72) Erfinder: SCHÖLCH, Frank, 69434 Hirschhorn (DE); SCHÖLCH, Simon, 69434 Hirschhorn (DE); HÖFLER, Christian, 69151 Neckargemünd (DE)
(74) Vertreter: Patentanwälte Schuster, Müller & Partner mbB

(57) **Zusammenfassung**

Es werden eine Induktionsanlage und ein Verfahren zum Betreiben einer Induktionsanlage vorgeschlagen, wobei die gemäß Stand der Technik zentral in einem großen Steuerschrank eingebaute Leistungselektronik soweit in ihrer Baugröße und ihrem Preis reduziert wird, dass sie direkt an der Induktionseinheit bzw. den Induktionseinheiten untergebracht werden kann, so dass sich mindestens eine Intelligente Induktionseinheit mit integriertem Frequenzumrichter ergibt, die bevorzugt mit normalem Netzstrom von 230 V oder 400 V oder mit Gleichstrom versorgt wird.

## Beschreibung

### Stand der Technik

Die Erfindung geht aus von einer Induktionsanlage, nach der Gattung des Anspruchs 1, und einem Verfahren zum Betreiben einer Induktionsanlage, nach der Gattung des Anspruchs 10.

Zur Verklebung von Bauteilen, insbesondere von Bauteilen im Automobilbereich, gehört es seit langem zum Stand der Technik, dass die Klebstoff-Aushärtung in Durchlauföfen durchgeführt wird. Nachteilig ist hierbei, dass die Klebstoff-Aushärtung langwierig ist. Ein weiterer Nachteil der Durchlauföfen ist, dass diese aufgrund der Größe und der Kosten zentral aufgestellt sind, wobei Werkstücke von verschiedenen Produktionslinien, wie beispielsweise Motorhauben verschiedener PKW-Modelle zusammengeführt zuzuführen und nach einem Ofendurchlauf wieder aufzuspalten sind. Ein weiterer Nachteil der Öfen ist, dass diese nicht nur punktuell die erforderliche Zonen erwärmen, sondern die gesamten Werkstücke. Dies führt oft zu mechanischem Verzug und hohem Energieverbrauch.

Um diese Nachteile zu beseitigen, wird seit geraumer Zeit insbesondere im Automobilbereich die Technologie der induktiven Klebstoffaushärtung von Bauteilen, beispielsweise einem Innen- und einem Außenblech einer Motorhaube oder eines Kotflügels, eingesetzt. Wie in der Offenlegungsschrift DE10 2012 002 404 A1 beschrieben, werden hierzu Induktionsklebeanlagen hergestellt, die die jeweilige Bauteilgeometrie abbilden. Dabei wird an jedem vorgesehenen Klebepunkt zwischen den beiden Bauteilen eine Induktionsstelle, oft als "Spot" bezeichnet, angeordnet, durch die die induktive Heizleistung aufgebracht wird. Dabei sind sämtliche dieser Spots der bekannten klassischen Induktionsklebeanlagen, auch als Bonding-Stationen bekannt, in Reihe geschaltet und über eine Schiene verbunden; die Energieversorgung aller Induktionsstellen erfolgt durch eine einzige Energiequelle. Die vorstehend genannte Schiene führt dabei zwei Funktionen aus: Zufuhr von Strom sowie von Kühlwasser. Die Stromleitung ist meistens aus Kupfer, die einstückig geführt und hochstromig nutzbar ist. Nachteilig ist hierbei, dass es bis heute nahezu unmöglich ist, trotz manuellen Einstellung aller vorhandenen Induktoren, eine ideale Temperatursteuerung an allen Klebepunkten bereitzustellen. Dies kann Einfluss auf die qualitative Beschaffenheit der Klebestelle und somit des Bauteils nehmen, ebenso ergibt sich häufig ein mechanischer Verzug durch thermisch bedingte Verspannung des Bauteils. Darüber hinaus ist es erforderlich, das hohe Maß an Energie bereitzustellen, um die erforderliche, an den Endpunkten bereitzustellende induktive Heizleistung zu realisieren. Zudem sind derartige Anlagen sehr teuer, da eine erforderliche hohe Kühlleistung den Einsatz von Pumpen, Wasserspeichern, Wärmetauschern und weiteren Geräte, wie Kälteaggregate, erforderlich macht.

Um diese Nachteile zu überwinden, wird in der Offenlegungsschrift DE10 2012 002 404 A1 eine Induktionseinheit, die zum induktiven Verkleben von Bauteilen im Multispotbonding-Verfahren geeignet ist, vorgeschlagen, wobei die Induktionseinheit einen Transformator umfasst, der mit zumindest einem an einer Haltevorrichtung angeordneten Induktor zu einer transportablen Bauteileinheit verbunden ist, wobei ein Eingang des Transformators mit einer Niederstromleitung verbunden ist und wobei eine Hochstromleitung von einem Induktionsseitigen Ausgang des Transformators zu dem zumindest einen Induktor führt. Des Weiteren wird in der Offenlegungsschrift DE10 2012 002 404 A1 eine Gelierstation, die zur Ausführung von induktivem Verkleben zweier Bauteilkomponenten im Multispotbonding-Verfahren geeignet ist, vorgeschlagen, wobei die Gelierstation eine Mehrzahl von den eben erwähnten Induktoren aufweist, wobei jeweils eine Anzahl von 1 bis n Induktionseinheiten mit Induktoren, für die die Erbringung gleicher Heizleitung vorbestimmt ist, in einer Induktorengruppe (A, B, C, D, E, F) zusammengefasst ist und wobei der zumindest eine Transformator der Induktionseinheiten jeder Induktorengruppe (A, B, C, D, E, F) über seinen Eingang zur Energieversorgung mit der Energiequelle verbindbar ist, wodurch die über eine Kondensatorbank an den Frequenzumrichter angeschlossen Induktionseinheiten in einer Reihenschaltung mit der Energiequelle verbunden sind. Nachteilig ist hierbei, dass der Frequenzumrichter, der die Heizleistung durch Erzeugung einer variablen Frequenz, Spannung und Stromstärke reguliert, aus wirtschaftlichen Gründen und, da die Baugröße begrenzt ist, nur eine beschränkte Anzahl an Ausgangskanälen (z.B. 6 Stück) zur Verfügung stellen kann, wodurch eine Gruppenzusammenschaltung zwangsläufig erforderlich ist. Dies hat zur Folge, dass die Heizleistung der in einer Gruppe zusammengeschalteten Induktionseinheiten vom Frequenzumrichter nur gemeinsam geregelt werden kann. Zur Einstellung der Temperaturen aller Induktionseinheiten sind daher sowohl Anpassungen an den Heizprogrammen der Umrichterkanäle, als auch mechanische Einstellungen der Koppelabstände zwischen Induktionseinheiten und Werkstückoberfläche erforderlich. Sofern sich bei der Inbetriebnahme herausstellt, dass Induktionseinheiten in einer gemeinsamen Gruppe verschaltet sind, obwohl die von ihnen erwärmten Werkstückzonen stark abweichende Erwärmparameter erfordern, sind die Induktionseinheiten neu zu gruppieren und die gesamte Einstellung ist mit hohem Aufwand zu wiederholen. Zudem ist mit praktikabel umsetzbaren Stromstärken die Anzahl der pro Umrichterausgang betreibbaren Induktionseinheiten stark beschränkt. Des Weiteren ist der Aufwand für die Verkabelung sehr hoch, da jede Induktionseinheit einzeln mit mittelfrequenztauglicher, spannungsfester Leitung zur Kondensatorbank zu verdrahten ist, in der Kondensatorbank die zu gruppierenden Induktionseinheiten an Klemmenblöcken in Reihe zu schalten sind, von der Kondensatorbank einzelne Kabel zu jedem der Umrichterausgänge zu verlegen sind, sämtliche Kabel entfernt von Stahlbauteilen zu verlegen sind, da sich diese durch das Streufeld erwärmen könnten, und die Mittelfrequenzkabel Störungen in Signalkabeln, wie Sensorleitungen oder Feldbuskabeln, induzieren.

Des Weiteren gehören auch diverse Handinduktionsgeräte zum Stand der Technik. Nachteilig ist bei diesen Handinduktionsgeräten, dass eine Ablaufsteuerung zur Realisierung komplexer Erwärmprozesse und eine Möglichkeit zur Vernetzung mit einer Zentralsteuerung fehlen, so dass die Handinduktionsgeräte nicht zu einem komplexen Gesamtsystem orchestriert werden können, und dass die Geräte nicht zur effizienten Erwärmung von Aluminium oder Kohlefaser-Verbundstoffe geeignet sind, da sie nur geringe Induktorströme liefern können.

Der Erfindung liegt daher die Aufgabe zugrunde, eine die Nachteile des Standes der Technik überwindende Induktionsanlage und ein die Nachteile des Standes der Technik überwindendes Verfahren zum Betreiben einer Induktionsanlage bereitzustellen.

### Die Erfindung und ihre Vorteile

Die erfindungsgemäße Induktionsanlage, mit den Merkmalen des Anspruchs 1, und das erfindungsgemäße Verfahren zum Betreiben einer Induktionsanlage, mit den Merkmalen des Anspruchs 10, haben demgegenüber den Vorteil, dass die gemäß Stand der Technik zentral in einem großen Steuerschrank eingebaute Leistungselektronik soweit in ihrer Baugröße und ihrem Preis reduziert wird, dass sie jetzt direkt an der Induktionseinheit bzw. den Induktionseinheiten untergebracht werden kann. Dadurch ergibt sich mindestens eine intelligente Induktionseinheit mit integriertem Frequenzumrichter. Bevorzugt wird die Induktionseinheit mit normalem Netzstrom von 230 V oder 400 V versorgt. Alternativ kann sie mit Gleichstrom versorgt werden.

Nach einer vorteilhaften Ausgestaltung der erfindungsgemäßen Induktionsanlage weist die Induktionseinheit mindestens eine Kommunikationsschnittstelle, vorzugsweise bidirektional z.B. Ethernet, RS485, CAN-BUS oder auch WLAN, auf.

Nach einer zusätzlichen vorteilhaften Ausgestaltung der erfindungsgemäßen Induktionsanlage weist die Induktionseinheit mindestens eine Kühlung auf. Zur Kühlung kann die Induktionseinheit mit Kühlwasser oder einem anderen Medien versorgt werden, bei geringen Leistungen ist aber auch eine Luftkühlung möglich.

Nach einer zusätzlichen vorteilhaften Ausgestaltung der erfindungsgemäßen Induktionsanlage ist eine Verkabelung von mehreren Induktionseinheiten reihen-, ring und/oder sternförmig. Vorzugsweise ist jede Induktionseinheit mit mindestens zwei Anschlüssen für Stromversorgung und mindestens zwei Anschlüssen für Kommunikation ausgestattet. In diesem Fall ist es bei geeignetem Kommunikationssystem, wie Ethernet, mit TCP/IP möglich, die Induktionseinheiten mit einfachen, vorkonfektionierten Kabeln in Reihe oder in Ringform zu verschalten. Bei hohen Gesamtleistungen ist es zweckmäßig, Verteiler und Stichleitungen in Sterntopologie einzusetzen, wobei die Topologien je nach System auch gemischt werden können. Ebenso ist es bei Einsatz eines geeigneten Bussystems, wie CAN, möglich, alle Induktionseinheiten elektrisch parallel an eine Linie zu schalten, wobei es beispielsweise bei Steckverbindern in Schneidklemmtechnik ausreichend sein kann, jede Induktionseinheit mit nur einer Schnittstelle auszustatten. Die Schneidklemmsteckverbinder werden in diesem Fall einfach an der benötigten Stelle auf die Kabel gepresst.

Es bietet sich an, Versorgungsleitungen und Steuerleitungen in einem gemeinsamen Leitungspaket bzw. einer speziell für diesen Zweck hergestellten Spezialleitung zu verlegen, wobei die Signalleitungen vorzugsweise abgeschirmt ausgeführt sind. In diesem Fall ist es möglich, kombinierte Stecker einzusetzen, welche an jedem Leitungsende den Leistungsanschluss und den Signalanschluss in einer Einheit kombinieren. Ebenfalls ist es jedoch möglich, die Steckverbinder und/oder die Kabel für Leistungs- und Steuersignalübertragung separat auszuführen oder mehrere Steuer- und/oder Leistungsanschlüsse in gemeinsamen Steckern zusammenzufassen. Bei Einsatz einer Funkverbindung, wie WLAN, kann die Steuerungsverkabelung entfallen.

Bei mediengekühlten Anlagen ist es möglich, die Medienleitungen mit in den Signal- und Leistungskabeln sowie auch in den Steckern zu integrieren oder diese mit separaten Steckern oder sonstigen Verbindungselementen zu verbinden.

Nach einer zusätzlichen vorteilhaften Ausgestaltung der erfindungsgemäßen Induktionsanlage weist die Induktionsanlage mindestens einen Verteiler auf. Um die Leitungen im Querschnitt gering zu halten, kann es bei hohen Spotanzahlen, Leitungslängen oder Leistungen vorteilhaft sein, Verteiler zwischenzuschalten. Diese können als zusätzliche Einspeisepunkte für die Stromversorgung dienen und Sicherungen für die einzelnen Abgänge enthalten. Verteiler sind auch einsetzbar, um die Bussignale zu konditionieren oder auf andere Medien oder Protokolle umzuwandeln, wie beispielsweise kupfergebundene Signale auf Glasfaser oder Ethernet auf CAN-Bus. Ebenso ist es möglich, mit ihnen Ringleitungen zu bilden, da sie mit mehreren Ports ausgestattet sein können. Im Fall von Ringleitungen können intelligente Switches ringförmig umherirrende Pakete herausfiltern.

Nach einer zusätzlichen vorteilhaften Ausgestaltung der erfindungsgemäßen Induktionsanlage weist die Induktionsanlage mindestens eine Ablaufsteuerung auf. Grundsätzlich ist es möglich, die einzelnen Induktionseinheiten direkt an die vorhandene Anlagensteuerung anzuschließen und diese direkt mit Netzspannung zu versorgen. Bei einer hohen Anzahl an Erwärmstellen ist es jedoch vorteilhaft, eine Ablaufsteuerungen zwischenzuschalten, welche die Abläufe der einzelnen Erwärm-stellen koordiniert, wodurch dann beispielsweise ein Sammelstart ausreichend ist. Die Ablaufsteuerung kommuniziert mit den Erwärmstellen, steuert und überwacht die Prozesse und sendet der Anlagensteuerung beispielsweise ein Sammelsignal IO (in Ordnung) oder NIO (nicht in Ordnung) zurück. Optional sind zur Qualitätssicherung Prozessdaten in der Ablaufsteuerung mitschreibbar oder an die vorhandene Steuerung übermittelbar. Wenn die Ablaufsteuerung mit einem Bedienpanel ausgestattet ist, sind Diagnose- und Betriebsparameter einfach überprüf- und einstellbar. Die Ablaufsteuerung kann auch die Ansteuerung eines Kühlsystems mit übernehmen und beispielsweise Pumpen einschalten oder Durchflüsse überwachen. Es bietet sich an, die Netzversorgung über die Ablaufsteuerung zu führen, um einen zentralen Hauptschalter und eine zentrale Funktion Not-Aus zu realisieren, welcher die Gesamtanlage spannungsfrei schaltet.

Es ist möglich, eine Installation mit mehreren Ablaufsteuerungen oder Verteilern auszustatten, um beispielsweise verschiedene Anlagenteile von verschiedenen Orten aus zu bedienen oder deren Zustand unabhängig zu visualisieren oder Subnetze mit jeweils gruppierten Induktionseinheiten zu bilden.

Nach einer zusätzlichen vorteilhaften Ausgestaltung der erfindungsgemäßen Induktionsanlage weist die Induktionsanlage mindestens ein Not-Aus-Konzept auf. Da eine Leistungszuführung einer Installation von mehreren Ablaufsteuerungen und Verteilern erfolgen kann, ist das Not-Aus-Konzept entsprechend auszulegen, so dass im Not-Aus-Fall das gesamte Netz freigeschaltet wird. Dies ist einfach mit sicheren Protokollen, wie beispielsweise PROFIsafe, möglich. Hierbei empfiehlt es sich, die Ablaufsteuerungen als Master einzusetzen, welche von der vorhandenen, übergeordneten Liniensteuerung das Not-Aus Signal erhalten und dieses an alle weiteren Einspeisestellen wie Verteiler oder andere Ablaufsteuerungen weiterleitet und die korrekte Aktivierung der Not-Aus Funktion sicher durch Rückmeldungen überwacht. Durch Entfall einzelner Leistungszuführkabel oder sonstiger mindestens einer Auftrennung der Leistungsverbindungen ist es möglich, Subnetze mit unabhängiger Stromversorgung zu bilden, beispielsweise zur Realisierung getrennter Not-Aus-Zellen.

Nach einer zusätzlichen vorteilhaften Ausgestaltung der erfindungsgemäßen Induktionsanlage ist mindestens eine Induktionseinheit nebst ihrer Induktionsspule und/oder mindestens eine Induktionseinheit nebst ihrer Induktionsspule und einer Werkstückaufnahme auf einem Werkzeugträger montiert.

Nach einer zusätzlichen vorteilhaften Ausgestaltung der erfindungsgemäßen Induktionsanlage ist mindestens eine Induktionseinheit oder ein mindestens eine Induktionseinheit aufweisender Werkzeugträger auf einem Roboter oder einem beliebigen anderen Handlingsystem, wie z.B. einer Pneumatikachse, angeordnet. Denkbar ist auch, dass der Roboter, das Handlingsystem und/oder der Werkzeugträger mit mindestens einer Werkstückaufnahme ausgestattet ist.

Nach einer vorteilhaften Ausgestaltung des erfindungsgemäßen Verfahrens zum Betreiben einer Induktionsanlage, wobei die Induktionsanlage mindestens eine Induktionseinheit, die eine Induktionsspule aufweist, deren Heizleistung regelbar ist, und eine Steuerungselektronik zur Regelung der Heizleistung einer Induktionsspule aufweist, wobei die Steuerungselektronik in oder an der Induktionseinheit angeordnet ist, wodurch die Heizleistung einer Induktionsspule einzeln und unabhängig angesteuert und geregelt werden kann, ist zum Entnehmen mindestens einer Induktionseinheit aus der Induktionsanlage mindestens eine Induktionseinheit nebst ihrer Induktionsspule und/oder mindestens eine Induktionseinheit nebst ihrer Induktionsspule und einer Werkstückaufnahme auf einem Werkzeugträger montiert.

Nach einer zusätzlichen vorteilhaften Ausgestaltung des erfindungsgemäßen Verfahrens wird die Heizleistung einer Induktionsspule durch eine Kontrolle der Grenzwerte oder durch eine Hüllkurvenkontrolle kontrolliert.

Nach einer zusätzlichen vorteilhaften Ausgestaltung des erfindungsgemäßen Verfahrens wird ein Temperaturverlauf durch mindestens einen Temperatursensor überwacht.

Nach einer zusätzlichen vorteilhaften Ausgestaltung des erfindungsgemäßen Verfahrens wird mindestens ein Temperatursensor zur Stellwertsermittlung eingesetzt.

Nach einer zusätzlichen vorteilhaften Ausgestaltung des erfindungsgemäßen Verfahrens wird ein Temperaturverlauf einer Induktionseinheit durch Stellwerte beeinflusst, die durch ein Heizprogramm oder eine mathematische Funktion oder eine Punktefolge vorgegeben werden.

Nach einer zusätzlichen vorteilhaften Ausgestaltung des erfindungsgemäßen Verfahrens wird als Induktionsanlage eine Induktionsanlage, nach einem der Ansprüche 1 bis 9, eingesetzt.

Weitere Vorteile und vorteilhafte Ausgestaltungen der Erfindung sind der nachfolgenden Beschreibung, den Ansprüchen und den Zeichnungen entnehmbar.

### Zeichnungen

Bevorzugte Ausführungsbeispiele des erfindungsgemäßen Gegenstands sind in den Zeichnungen dargestellt und werden im Folgenden näher erläutert. Es zeigen
- Fig. 1: ein Prinzipschaltbild einer erfindungsgemäßen Induktionseinheit,
- Fig. 2: ein Prinzipschaltbild einer Ablaufsteuerung,
- Fig. 3: ein Prinzipschaltbild eines Verteilers,
- Fig. 4: ein Prinzipschaltbild eines umrüstbaren Werkzeugsatzes,
- Fig. 5: einen Kombistecker,
- Fig. 6: eine Beispielstruktur der erfindungsgemäßen Induktionsanlage,
- Fig. 7: ein idealisierter Temperaturverlauf,
- Fig. 8: ein Beispiel für eine mögliche Gestaltung eines Heizprogramms,
- Fig. 9: eine typische Erwärmkurve mit Toleranzband,
- Fig. 10: eine Ausführung eines Kreuzbandfühlers und
- Fig. 11: eine Hüllkurvenkontrolle.

### Beschreibung des Ausführungsbeispiels

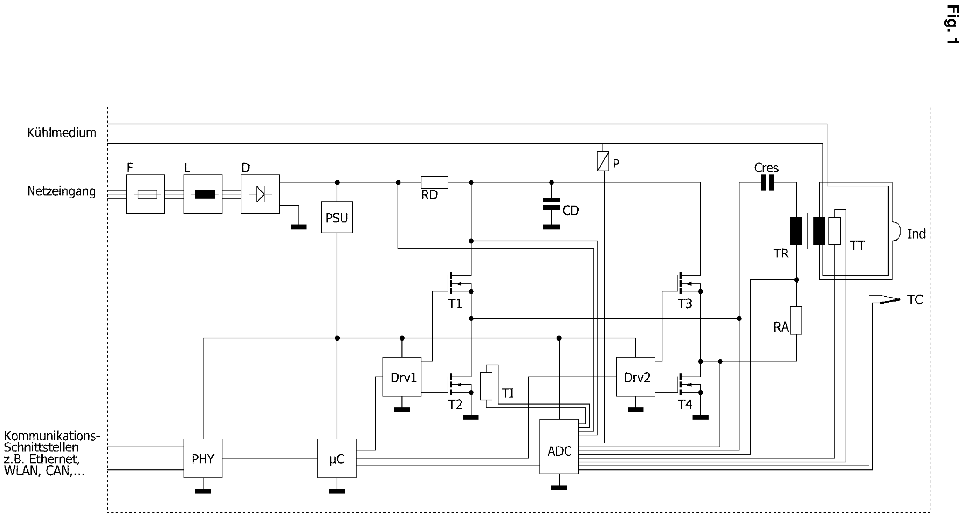

Fig. 1 zeigt ein Prinzipschaltbild einer erfindungsgemäßen Induktionseinheit. Hierbei sind folgende Komponenten vorgesehen:
- **P:** Drucksensor oder alternativ Durchflusswächter zur Überwachung des Kühlmediendrucks bzw. Durchflusses, sofern eine Kühlung eingesetzt wird
- **F:** Netzeingangssicherung
- **L:** Netzfilter zur Unterdrückung von Störsignalen
- **D:** Eingangsgleichrichter, kann bei DC-Speisung entfallen
- **PSU:** Netzteil zur Versorgung der internen Elektronik
- **RD:** Shuntwiderstand zur Strommessung im Zwischenkreis, kann durch Strommesswandler ersetzt werden.
- **CD:** Zwischenkreiskondensator
- **Cres:** Resonanzkondensator, kann bei Dreieckstrom entfallen
- **Ind:** Induktionsschleife oder Induktionsspule. Kann wassergekühlt oder luftgekühlt ausgeführt sein
- **TR:** Ausgangstransformator, kann entfallen, wenn Wechselrichter direkt den Induktorstrom treibt und Induktorsystem isoliert ist oder Versorgung der Einheit galvanisch getrennt erfolgt
- **TT:** Temperatursensor zur Erkennung von Übertemperatur im Induktorkreis, vorzugsweise PTC oder NTC
- **T1...4:** Schalttransistoren Wechselrichter, vorzugsweise SiC oder GaN MOSFET
- **TI:** Temperatursensor zur Erkennung von Übertemperatur im Inverter, vorzugsweise PTC oder NTC. Diese kann im Chip der Steuerung, den Treibern oder den Leistungshalbleitern integriert oder auch separat ausgeführt sein
- **Drv1/2:** Treiber für Schalttransistoren
- **TC:** Temperatursensor für Prozesstemperatur, vorzugsweise Kreuzbandfühler Thermoelement Typ K z.B. Fabrikat Testo
- **RA:** Shuntwiderstand zur Ausgangsstrommessung, kann durch Strommesswandler ersetzt werden
- **ADC:** Analog/Digital-Wandler
- **µC:** Steuerungssystem, vorzugsweise digital mit Mikrocontroller oder FPGA ausgeführt. Das Steuerungssystem lässt die Tabelle (Ablaufprogramm) ablaufen. Das Ablaufprogramm kann aber auch zentral in der Ablaufsteuerung abgelegt sein.
- **PHY:** Medienkonverter für Busansteuerung, vorzugsweise Ethernet, WLAN oder CAN-BUS. Bei kabelgebundenen Übertragungsmedien ist die Ausstattung mit mindestens zwei Schnittstellen vorteilhaft, so dass eine Reihen-, Ring- oder Sternanordnung möglich wird.

Die Induktionseinheit wird vorzugsweise mit einfacher Netzspannung von 230V oder 400V versorgt. Ein integrierter Gleichrichter erzeugt hieraus Gleichspannung, die mit kompakten DC-Link Kondensatoren gesiebt wird. Alternativ ist es möglich, die Induktionseinheit direkt mit Gleichspannung zu versorgen. Hierbei kann der interne Gleichrichter entfallen. Die gesiebte Gleichspannung wird einem Wechselrichter zugeführt, welcher das angeschlossene Induktorsystem direkt oder über einen integrierten Transformator mit Hochstrom versorgt. Zur Kommunikation ist eine Schnittstelle vorgesehen, welche Stellsignale wie beispielsweise Ein/Aus, Heizsollwert/Programmnummer, Fehler-Reset usw. entgegennimmt und Prozessparameter wie Istwert Heizleistung, Betriebszustand usw. zurücksendet. Die eigentliche Induktionsspule kann fest in der Einheit vergossen oder auch über Anschlussbacken oder Anschlusskabel an die Einheit angebunden sein. Zur eindeutigen Identifikation an der Kommunikationsschnittstelle ist die Einheit vorzugsweise mit einer Identifikationsnummer versehen, welche über von außen zugängliche Drehschalter eingestellt werden kann. Alternativ kann jede Einheit werksseitig mit einer eindeutigen Identifikationsnummer versehen werden, oder diese wird einzeln durch den Inbetriebnehmer beispielsweise mittels einer Einrichtsoftware zugeordnet. Die Induktionsstelle kann mit einem Temperatursensor (TC) ausgestattet sein, welcher die aktuelle Bauteiltemperatur überwacht. Das Temperatursignal kann über die Schnittstelle zur Ablaufsteuerung oder zum Betreiber bzw. dessen Anlagensteuerung übermittelt und bei Bedarf auch intern für Heizprogrammabläufe oder Qualitätssicherungszwecke ausgewertet und mitgeschrieben werden. Generell ist es möglich, anstelle eines Temperatursensors (TC) pro Erwärmstelle auch mehrere Sensoren einzusetzen, deren Signale zu einem repräsentativen Einzelsignal verrechnet werden. Hierdurch werden Messfehler bei schwer zu messenden Erwärmzonen reduziert.

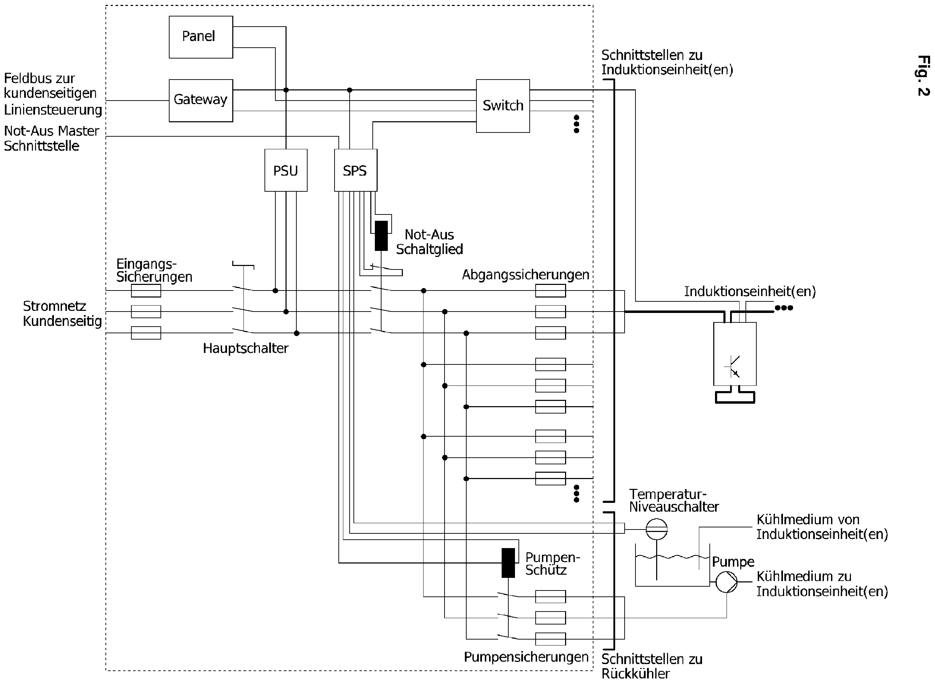

Fig. 2 zeigt ein Prinzipschaltbild einer Ablaufsteuerung. Grundsätzlich ist es möglich, den in jeder Induktionseinheit integrierten Mikrocontroller oder FPGA (Field Programable Gate Arrays) für die Steuerung des Programmablaufs heranzuziehen. In diesem Fall können Heizprogramme mit einem externen Programmiergerät, wie beispielsweise einem PC, in die jeweilige Heizeinheit einprogrammiert werden und der spätere Start erfolgt einfach über die Kommunikationsschnittstelle. Aus Komfortgründen ist es jedoch vorzuziehen, die Heizprogramme an einer übergeordneten Ablaufsteuerung zu parametrieren, welche vorzugsweise mit einem Touch-Bildschirm ausgestattet ist.

Zur Steuerung des Ablaufs der Heizprogramme bieten sich folgende Methoden besonders an:
- Die zentrale Ablaufsteuerung übermittelt die Parameter der Heizphasen, wie beispielsweise Leistung, Zeit, Stellwertverlauf, Temperaturgrenzen und Energiegrenzen oder Hüllkurven, an die einzelnen Induktionseinheiten, welche mit der internen Steuerung die Heizprogramme mit mehreren Heizphasen ablaufen lassen, überwachen und hierbei Status/Prozessrückmeldungen geben. Dieses Verfahren ist wegen der besseren Echtzeitfähigkeit bevorzugt, erfordert aber eine leistungsstärkere Steuerung in den Induktionseinheiten und ein komplexeres Protokoll der Kommunikation.
- Die zentrale Ablaufsteuerung übermittelt direkt die jeweiligen, aktuellen Sollwerte, beispielsweise für Leistung oder Strom, an die Induktionseinheiten, wobei der Ablauf der ggf. mehrphasigen Programme in der Ablaufsteuerung erfolgt, welche auch die Prozesse über die von den Induktionseinheiten zurückgemeldeten Prozesssignale, wie Energie überwacht. Zykluszeiten der Bussteuerung verringern die Prozessgenauigkeit des Heizprogrammablaufs, da die Heizzeiten um die Dauer von bis zu zwei Kommunikationszyklen abweichen können, dafür sind jedoch einfachere Steuerungen in den Induktionseinheiten ausreichend.

Eine mögliche Struktur der Ablaufsteuerung ist in Fig. 2 dargestellt. Diese ist exemplarisch mit drei Abgängen ausgestattet, wobei die Anzahl der Leistungs- und Signalabgänge von dem konkreten Einsatz abhängig gestaltet werden kann. So ist es ebenso möglich, die Ablaufsteuerung ohne Leistungsabgänge auszuführen und die Einspeisung direkt an die Induktionseinheiten oder über Verteiler auszuführen. Die beispielhafte Ablaufsteuerung enthält vorzugsweise folgende Komponenten:
- **Panel:** Anzeigegerät zur Parametrierung der Heizprogramme sowie Anzeige von Betriebs- und Fehlerzuständen. Vorzugsweise kommt ein Touch-Bildschirm zum Einsatz, alternativ sind klassische Eingabegeräte wie Maus, Trackball und Keyboard nutzbar.
- **Gateway:** Bindet das betreiberseitige Netz, wie beispielsweise Profinet, an das interne Netz, wie beispielsweise Ethernet mit TCP/IP, an. Bei identischen Medien ist ein Router, Switch oder Hub ausreichend.
- **Switch:** Stellt mehrere Ports zum Anschluss der internen Komponenten sowie der externen Induktionseinheiten bereit.
- **PSU:** Netzteil zur Versorgung der in der Ablaufsteuerung integrierten Komponenten.
- **SPS:** Speicherprogrammierte Steuerung oder ein sonstiger Prozessrechner, wie z.B. Industrie-PC, Einplatinencomputer oder Mikrocontroller/FPGA-Steuerkarte zur Verwaltung der Heizprogramme und ggf. auch Steuerung des Ablaufs der Heizprogramme. Bei komplexeren Installationen mit einer Vielzahl an Induktionseinheiten und Verteilern mit Einspeisefunktion ist es zweckmäßig, die Not-Aus-Funktion über diese Steuerung zu kontrollieren, wobei diese fehlersicher auszuführen ist. Alternativ kann die Not-Aus-Funktion über klassische Sicherheitsrelais erfolgen.
- **Not-Aus-Schaltglied:** Gestattet die sichere Trennung der Induktionseinheiten vom Stromnetz im Fall eines Notfalls.
- **Eingangssicherungen:** Schützt die Komponenten in der Ablaufsteuerung bei einem internen Defekt.
- **Abgangssicherungen:** Schützt die abgehenden Leitungen zu den Induktionseinheiten im Fall eines Isolationsschadens, Verkabelungsfehlers, Fehlauslegung der Anlage, wie zu hohe Anzahl der angeschlossenen Induktionseinheiten, oder technischen Defekts vor Überstrom.
- **Hauptschalter:** Ermöglicht die zentrale Spannungsfreischaltung der gesamten Anlage, beispielsweise bei Wartungsarbeiten oder längerem Produktionsstillstand.
- **Pumpenschütz:** Schaltglied zum Aktivieren/Deaktivieren der Rückkühlerpumpe.
- **Gleichrichter:** Im Fall einer Gleichstromspeisung der Induktionseinheiten ist in der Ablaufsteuerung ein Gleichrichter integriert. Dieser wird vorzugsweise hinter das Not-Aus-Schaltglied geschaltet, so dass dieses als preiswertes Wechselstromschaltglied ausgeführt sein kann. Es ist ebenso möglich, mehrere einzelne Gleichrichter geringerer Leistung für die einzelnen Abgänge einzusetzen.
- **Energieverbrauchsmessgerät:** Die Ablaufsteuerung kann am Netzeingang mit einem geeichten Energieverbrauchsmessgerät ausgestattet werden oder die Gesamtenergie aus den per Schnittstelle von den einzelnen Induktionseinheiten übermittelten Daten berechnen.

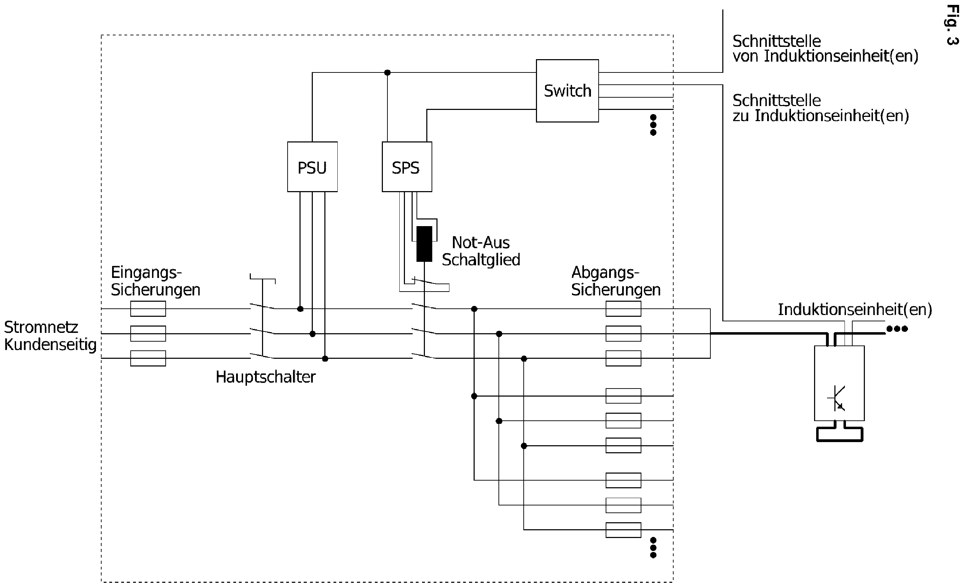

Fig. 3 zeigt ein Prinzipschaltbild eines Verteilers. Bei umfangreichen Installationen mit einer Vielzahl an Induktionseinheiten oder hohen Gesamtleistungen ist es zur Minimierung der erforderlichen Kabelquerschnitte zweckmäßig, mehrere Einspeisepunkte zu nutzen. Ebenso können die Verteiler zur Signalkonditionierung auf langen Kabelwegen oder als Abzweige für Leistungs- oder Steuerungskabel eingesetzt werden.

Vorzugsweise wird die Struktur der Verteiler in Anlehnung an die Ablaufsteuerung ausgeführt, wobei allerdings die nicht benötigten Komponenten, wie beispielsweise Bedienpanel oder Gateway, entfallen.

Hierbei sind folgende Komponenten vorgesehen:
- **Switch:** Stellt mehrere Ports zum Anschluss der internen Komponenten sowie der externen Induktionseinheiten bereit.
- **PSU:** Netzteil zur Versorgung der in dem Verteiler integrierten Komponenten.
- **SPS:** Fehlersichere speicherprogrammierbare Steuerung oder sonstiger fehlersicherer Prozessrechner zur Steuerung der Not-Aus Funktionalität. Das Not-Aus-Signal wird von der Ablaufsteuerung auch an die Verteiler übermittelt, welche im Not-Aus-Fall ihre Einspeisung ebenfalls spannungsfrei schalten. Hierzu ist der Einsatz einer fehlersicheren Steuerung und eines fehlersicheren Protokolls, wie beispielsweise PROFIsafe, erforderlich. Alternativ kann die Not-Aus-Funktion über klassische Sicherheitsrelais erfolgen.
- **Not-Aus-Schaltglied:** Gestattet die sichere Trennung der Induktionseinheiten vom Stromnetz im Fall eines Notfalls.
- **Eingangssicherungen:** Schützt die Komponenten in dem Verteiler bei einem internen Defekt.
- **Abgangssicherungen:** Schützt die abgehenden Leitungen zu den Induktionseinheiten im Fall eines Isolationsschadens, Verkabelungsfehlers, Fehlauslegung der Anlage, wie zu hohe Anzahl der angeschlossenen Induktionseinheiten, oder technischen Defekts vor Überstrom.
- **Hauptschalter:** Ermöglicht die Spannungsfreischaltung des Verteilers und der von ihm versorgten Induktionseinheiten, beispielsweise bei Wartungsarbeiten oder längerem Produktionsstillstand.
- **Gleichrichter:** Im Fall einer Gleichstromspeisung der Induktionseinheiten ist in dem Verteiler ein Gleichrichter integriert. Dieser wird vorzugsweise hinter das Not-Aus-Schaltglied geschaltet, so dass dieses als preiswertes Wechselstromschaltglied ausgeführt sein kann. Es ist ebenso möglich, mehrere einzelne Gleichrichter geringerer Leistung für die einzelnen Abgänge einzusetzen.
- **Energieverbrauchsmessgerät:** Die Verteiler können am Netzeingang mit einem geeichten Energieverbrauchsmessgerät ausgestattet werden oder die Gesamtenergie aus den per Schnittstelle von den einzelnen Induktionseinheiten übermittelten Daten berechnen.

Sofern ein Verteiler nur zur Signalkonditionierung oder als Abzweigdose eingesetzt wird, können die nicht-benötigten Komponenten entfallen. Beispielsweise ist es möglich, das Netzteil mit den Leistungszuführkabeln der Induktionseinheiten zu versorgen und dieses zur Versorgung des Switchs zu nutzen. In diesem Fall ist ein Verteiler lediglich mit Netzteil und Switch ausgestattet.

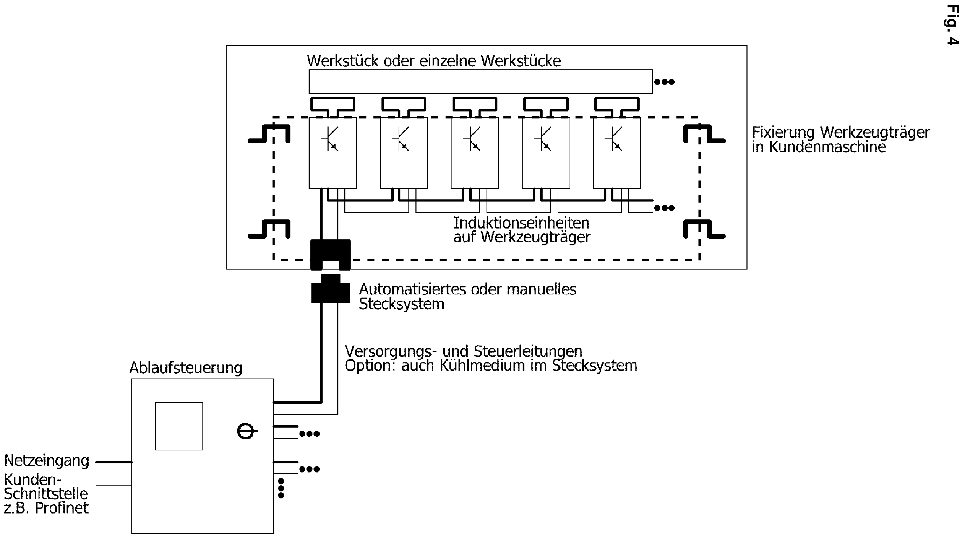

Fig. 4 zeigt ein Prinzipschaltbild eines umrüstbaren Werkzeugsatzes. Die Induktionseinheiten mit Induktionsspule sind auf Werkzeugträgern montierbar, welche auf die jeweils zu produzierenden Werkstücke fest eingerichtet sind. Diese Werkzeugträger sind in der Maschine oder Anlage beispielsweise mit Zentrierstiften und Schnellspanneinrichtungen leicht entnehmbar fixiert. Bei Umrüstung der Maschine auf andere Werkstücktypen ist es somit leicht möglich, den gesamten Werkzeugträger mit einer oder mehreren Induktionseinheiten zu entnehmen und diesen durch einen fertig eingerichteten Werkzeugträger mit einer oder mehreren auf andere Werkstücke eingerichteten Induktionseinheiten zu ersetzen. Ebenso ist im Servicefall ein gesamter Werkzeugträger durch fertig eingerichtete Ersatzwerkstückträger ersetzbar, was Stillstandzeiten minimiert. Es ist möglich, auch die Werkstückaufnahmen mit auf den Werkzeugträger zu integrieren, um somit die Umrüstung oder Instandsetzung weiter zu vereinfachen.

Bedingt durch die einfache Topologie des Systems ist es hierbei im Idealfall ausreichend, eine lösbare Verbindungsstelle, insbesondere einen einzelnen Zentralstecker umzustecken, welche Leistungs- und Steuerungskabel sowie ggf. auch Kühlmedienzuleitungen verbindet. Diese lösbare Verbindungsstelle (z.B. Stecker) kann auch als automatisiert lösbares Dockingsystem ausgeführt sein.

Da die Induktionseinheiten durch die aktuell zur Verfügung stehende Halbleitertechnologie preiswert herstellbar sind, ist dieses System wirtschaftlich darstellbar.

Das System der umrüstbaren Werkzeugträger ist in Fig. 4 beispielhaft dargestellt. Der Einsatz mehrerer Induktionseinheiten bietet sich an zur Erwärmung mehrerer Zonen eines Werkstücks oder zur simultanen oder alternierenden Erwärmung von einzelnen Werkstücken identischer oder unterschiedlicher Ausführung.

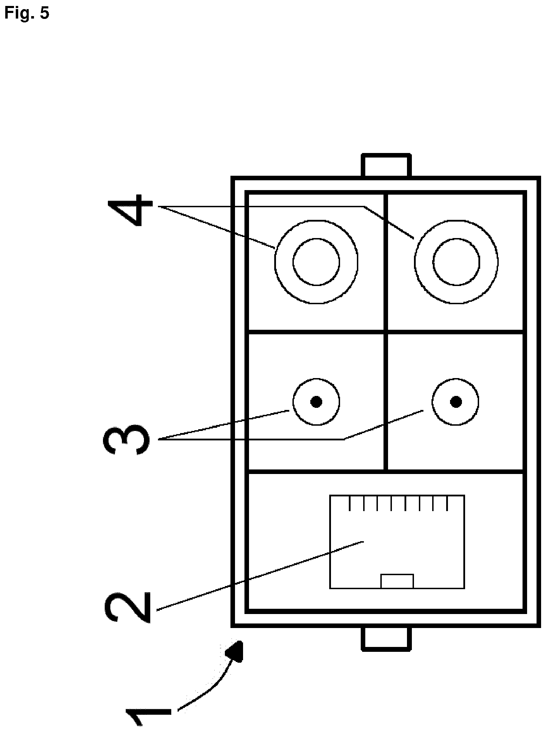

Eine weitere Anwendung des Systems ergibt sich durch Montage einer oder mehrerer Induktionseinheiten oder eines Werkzeugträgers mit einer oder mehreren Induktionseinheiten auf einem Roboter oder auf einem anderen Handlingsystem, wie z.B. eine Pneumatikachse. Durch die erfindungsgemäßen Induktionseinheiten vereinfacht sich hierbei die Anwendung und Führung der hochflexiblen Kabel am Roboter und die Störeinstrahlung in die Robotersensorik wird vermieden. Bei Einsatz eines Werkzeugträgers ist weiterhin die erfindungsgemäße lösbare Verbindungsstelle, die insbesondere eine Steckverbindung ist und die in Fig. 5 dargestellt ist, als einfaches Dockingsystem nutzbar.

Fig. 5 zeigt einen Kombistecker 1. Dieser weist eine Ethernet-Schnittstelle 2 (RJ45), eine Versorgung 3 (+500V / GND) und eine Kühlung 4 mit Vor- und Rücklauf auf.

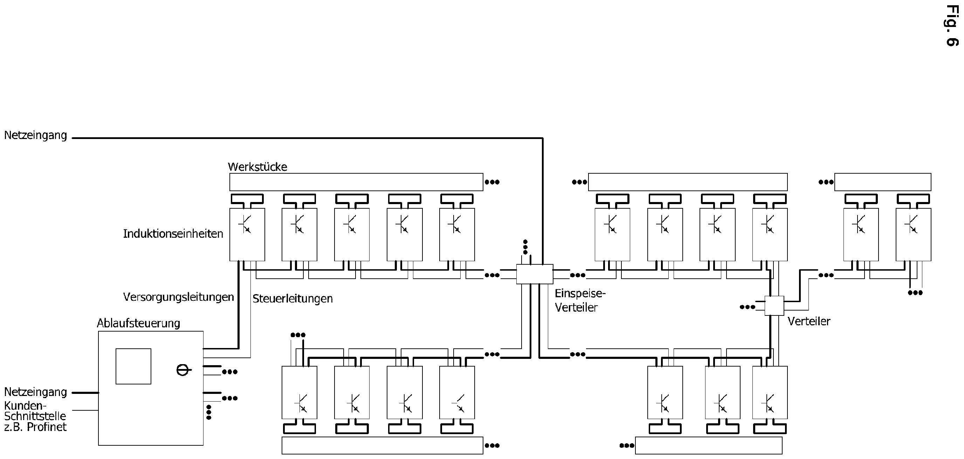

Fig. 6 zeigt eine Beispielstruktur der erfindungsgemäßen Induktionsanlage.

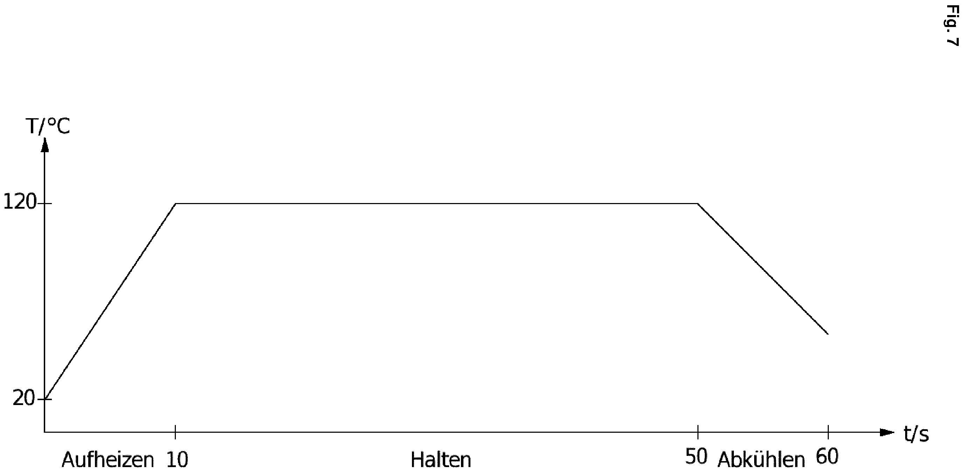

Fig. 7 zeigt ein idealisierter Temperaturverlauf. Zur thermischen Gelierung von Klebstoff ist ein Temperaturprofil, wie in Fig. 7 idealisiert am Beispiel von 2K-Klebstoff und Aluminium-Motorhauben dargestellt, geeignet. Dieses aus Anwendungen nach Stand der Technik (DE 10 2012 002 404 A1) bekannte Profil gliedert sich in folgende Phasen:
1. **Aufheizphase:** Mit einer verhältnismäßig hohen Leistung wird das Werkstück im Bereich der Klebezone auf die gewünschte Geliertemperatur gebracht. Die Ausgangstemperatur entspricht in den meisten Fällen näherungsweise der Umgebungstemperatur der Produktionshalle, sie kann jedoch auch durch vorgelagerte Prozesse wie Rollfalzen oder abgebrochene Erwärmvorgänge höher liegen. Abhängig von den Eigenschaften des Klebstoffs und der gewünschten Aufnahme von Schmierstoffresten durch den Klebstoff wird eine Geliertemperatur von näherungsweise 120°C für 2K-Klebstoffe oder 175°C für 1 K-Klebstoffe angestrebt. Der maximal zulässige Gradient wird durch die Klebstoffeigenschaften bestimmt, wie beispielsweise die für das Ausdiffundieren von im Klebstoff enstehenden Gasen benötigte Zeit. Typische Heizzeiten liegen in der Größenordnung von 10 s, in Sonderfällen bis 60 s.
2. **Haltephase:** In dieser Phase wird der Klebstoff auf Geliertemperatur gehalten, wobei die Vernetzung des Klebstoffs stattfindet. Oft reicht es aus, den Klebstoff bis zu einer gewissen Grundfestigkeit zu gelieren, welche für die Einprägung der Werkstückgeometrie oder das weitere Handling des Werkstücks ausreicht. Diese Phase dauert i.d.R. 40 s, in Sonderfällen bis 5 Minuten an. Die Endfestigkeit wird hierbei bei 1K-Klebstoff im KTL-Bad erreicht, 2K-Klebstoffe härten von alleine bei Raumtemperatur aus.
3. **Abkühlphase:** Der gelierte Klebstoff weist bei hoher Temperaturen noch eine reduzierte Festigkeit auf. Aus diesem Grund ist es bei einigen Prozessen erforderlich, eine Abkühlungsphase anzuschließen. Diese kann mit reduzierter Leistung verzögert werden, um Spannungen im Werkstück abzubauen. Es ist jedoch ebenso möglich, die Erwärmung vollständig abzuschalten und das Werkstück beispielsweise durch Luftströmung aktiv zu kühlen.

Für andere Anwendungen wie beispielsweise das induktive Löten, sind diese Phasen ebenfalls einsetzbar, wobei hier andere Temperaturniveaus entsprechend der jeweiligen Prozessanforderungen zu programmieren sind.

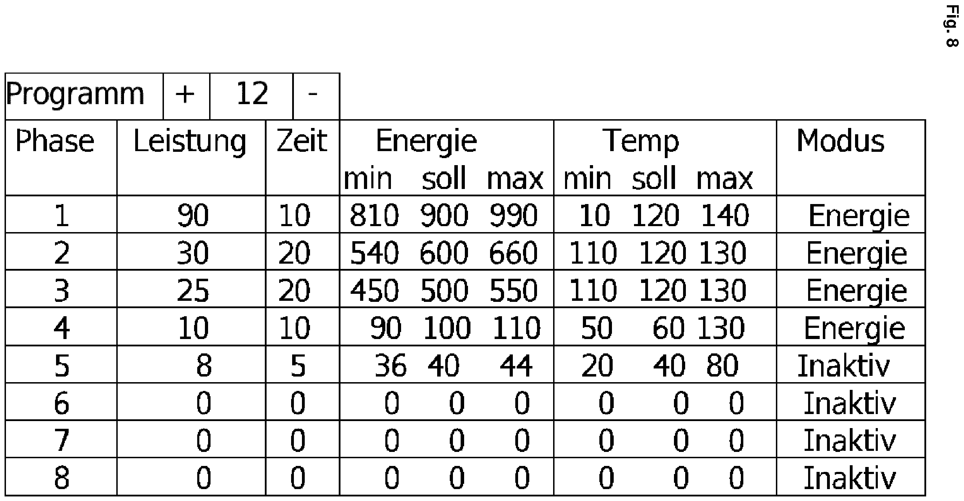

Fig. 8 zeigt ein Beispiel für eine mögliche Gestaltung eines Heizprogramms. Zur praktischen Realisierung des Erwärmprozesses sind in der Ablaufsteuerung eine oder mehrere Erwärmprofile in Form von Heizprogrammen abgelegt. Diese können vorzugsweise auf einem Touch-Bildschirm in einer tabellarischen Eingabemaske zur komfortablen Parametrierung durch den Anwender dargestellt werden.

Hierbei haben die einzelnen Parameter folgende Bedeutung:
- **Programm:** Eingabe der zu parametrierenden Programmnummer.
- **Phase:** Das Heizprogramm wird sequentiell in aufsteigenden Phasennummern ausgeführt. In der Praxis ist es für die meisten Aufgaben ausreichend, 8 Phasen vorzusehen.
- **Leistung:** Im Energiesteuermodus wird dieser Wert direkt als Sollwert für Heizleistung bzw. Heizstrom an die Leistungselektronik gesendet. Im Temperaturregelmodus erhält die Leistungselektronik ihren Sollwert vom Temperaturregler, der Parameter Leistung wird hierbei jedoch als Stellgrößenbegrenzung verwendet, um Überschwingen des Reglers zu vermeiden.
- **Zeit:** Spezifiziert die nominale Dauer der Heizphase.
- **Energie min/max:** Die in jeder Heizphase in das Werkstück eingebrachte Energie wird von der Leistungselektronik gemessen und von der Steuerung kontinuierlich ausgewertet. Mit den min/max-Grenzen ist es möglich, Fehlerzustände zu erkennen und zu melden. Parallel hierzu kann die Steuerung die Energiewerte für Qualitätssicherungszwecke mitschreiben.
- **Energie soll:** Im Energiesteuermodus mit Weiterschaltung wird zur nachfolgenden Phase weitergeschaltet, wenn die Sollenergie von der Leistungselektronik abgegeben wurde. Dies erfolgt auch, wenn die Zeit noch nicht abgelaufen ist.
- **Temp min/max:** Während des Ablaufs der Heizphase wird kontinuierlich die Werkstücktemperatur gemessen und die Ablaufsteuerung prüft zur Fehlererkennung kontinuierlich, ob die Werkstücktemperatur im spezifizierten Toleranzband liegt. Parallel hierzu kann die Steuerung die Temperaturwerte für Qualitätssicherungszwecke mitschreiben.
- **Temperatur soll:** Bestimmt den Sollwert des Temperaturreglers. Im Temperaturregelmodus mit Weiterschaltung wird zur nachfolgenden Phase weitergeschaltet, wenn die Werkstücktemperatur die Solltemperatur erreicht hat. Dies erfolgt auch, wenn die in der Phase angegebene Zeit noch nicht abgelaufen ist.
- **Modus:** Dieser Parameter schaltet zwischen den Betriebsmodi um:
   - **Energiesteuermodus:** Für die parametrierte Zeit wird mit der parametrierten Leistung oder dem parametrierten Strom geheizt. Das System überwacht den Prozess hierbei auf Verlassen der Grenzen Temp min/max sowie auf Energie max. Nach Ablauf der Zeit wird geprüft, ob Energie min erreicht wurde, dann schaltet das System zur nächsten Phase.
   - **Energiesteuermodus mit Weiterschaltung:** Entspricht dem normalen Energiesteuermodus, allerdings wird sofort bei Erreichen der Sollenergie und nicht erst bei Ablauf der Zeit zur nächsten Phase weitergeschaltet. Bei Nichterreichen der Sollenergie läuft die Phase bis zum Ablauf der parametrierten Zeit.
   - **Temperaturregelmodus:** Für die parametrierte Zeit wird mit Temperaturregler die Leistung so geregelt, dass die vorgegebene Solltemperatur erreicht und gehalten wird. Das System überwacht den Prozess hierbei auf Verlassen der Grenzen Temp min/max sowie auf Energie max. Nach Ablauf der Zeit wird geprüft, ob Energie min erreicht wurde, dann schaltet das System zur nächsten Phase.
   - **Temperaturregelmodus mit Weiterschaltung:** Entspricht dem normalen Temperaturregelmodus, allerdings wird sofort bei Erreichen der Solltemperatur und nicht erst bei Ablauf der Zeit zur nächsten Phase weitergeschaltet. Bei Nichterreichen der Solltemperatur läuft die Phase bis zum Ablauf der parametrierten Zeit.
   - **Deaktivierte Phase:** Die Phase ist inaktiv und wird übersprungen. Deaktivierte Phasen können am Programmende vorkommen, wenn nicht sämtliche 8 Phasen genutzt werden, es ist allerdings auch möglich, eine oder mehrere Phasen am Anfang oder in der Mitte des Programms zu überspringen.

Anstelle des Energiesteuermodus ist es möglich, eine Ladungssteuerung einzusetzen. Hierbei wird nicht die Energie als Integral der Leistung über die Zeit bewertet, sondern die Ladung als Integral des Stroms über die Zeit.

Der Temperaturregelmodus und die Nutzung der Temperaturwerte zur Prozesskontrolle erfordern die Ausstattung der Induktionsanlage mit einem geeigneten Temperatursensor. In Basisausstattung der Anlage ist ausschließlich der Energiesteuermodus nutzbar. Sofern die Induktionsanlage nicht mit einem Temperatursensor ausgestattet ist, ist zur Einstellung der Heizprogramme ein externes Temperaturmessgerät wie beispielsweise ein Datalogger einzusetzen.

Die Heizprogrammverwaltung erfolgt bevorzugt in der Ablaufsteuerung, die Daten können aber auch an einem anderen Ort gespeichert sein, beispielsweise auf einem Server.

Generell ist es möglich, mehrere Erwärmstellen zu koppeln und diese beispielsweise leistungsproportional oder leistungsidentisch zu steuern oder zu regeln. Die so gekoppelten Induktionseinheiten wirken in diesem Fall wie eine größere, leistungsstärkere Induktionseinheit, was bei Werkstücken mit hohem Wärmebedarf oder bei Erwärmung dicker Materialschichten von mehreren Seiten sinnvoll ist. Diese Kopplung kann im Temperaturmodus wie auch im Energiemodus erfolgen.

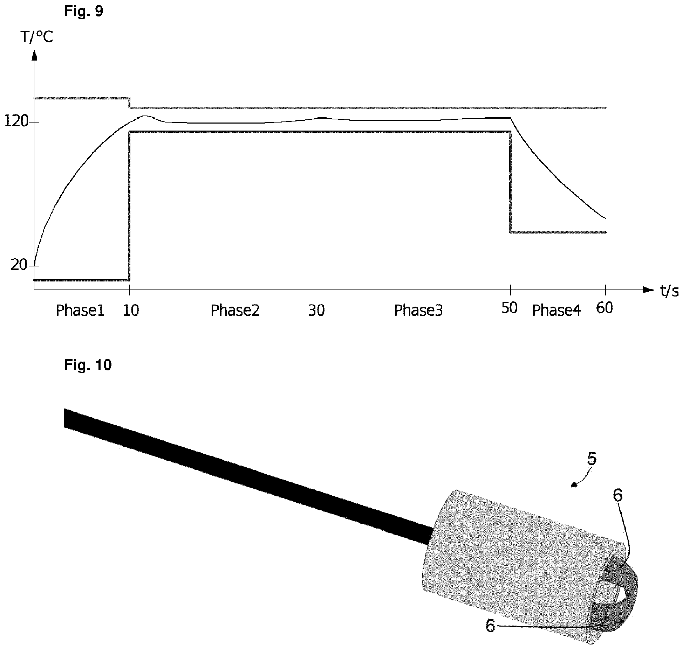

Fig. 9 zeigt eine typische Erwärmkurve mit Toleranzband. In Fig. 9 ist eine typische Erwärmkurve mit Toleranzband dargestellt, wie sie sich aus dem Beispielprogramm aus Fig. 8 ergibt. Erkennbar ist, dass im Energiesteuermodus beim Umschalten von der Aufheizphase 1 in die Haltephase 2 die Temperatur zuerst abfällt, um dann gegen Ende der Zeit wieder anzusteigen. Ursache ist, dass sich die eingebrachte Wärme durch Wärmefluss im Werkstück verteilt, wodurch in Folge ein Wärmestau auftritt. Aus diesem Grund ist es zur Erzielung einer stabilen Temperatur während längerer Temperaturhaltephasen im Allgemeinen erforderlich, dies auf mehrere kürzere Temperaturhaltephasen mit entsprechend reduzierten Sollwerten aufzuteilen. Im Temperaturregelmodus tritt dieser Effekt nicht auf, da der Temperaturregler den Sollwert stetig anpasst.

Fig. 10 zeigt eine Ausführung eines Kreuzbandfühlers 5 Typ K, wie er zur Messung der Werkstücktemperatur genutzt werden kann. Es handelt sich um ein werkstückberührendes Element, dessen Kreuzbandkalotte, die aus zwei sich überkreuzenden dünne Thermobändchen 6 besteht, bei jeder Berührung elastisch verformt wird. Am Berührungspunkt entsteht eine Thermospannung, welche von einem Messgerät erfasst werden kann. Dadurch kann die Oberfläche schnell und genau gemessen werden, wobei der Messstelle dabei nur wenig Wärme entzogen wird. Da aufgrund der Verformung die Lebensdauer beschränkt ist, ist es aus Gründen der Wartungskosten häufig nicht praktikabel, jede einzelne Erwärmstelle mit einem solchen Sensor auszustatten. Der Kreuzbandfühler 5 ist vorzugsweise federnd gelagert, um sich an der Werkstückoberfläche besser anzupassen und Verformung der Kalotte zu minimieren. Anstelle der Kreuzbandfühler 5 sind insbesondere bei höheren Temperaturen, wie bei den Lötvorgängen, auch Pyrometer als verschleißfreie Messeinrichtungen einsetzbar.

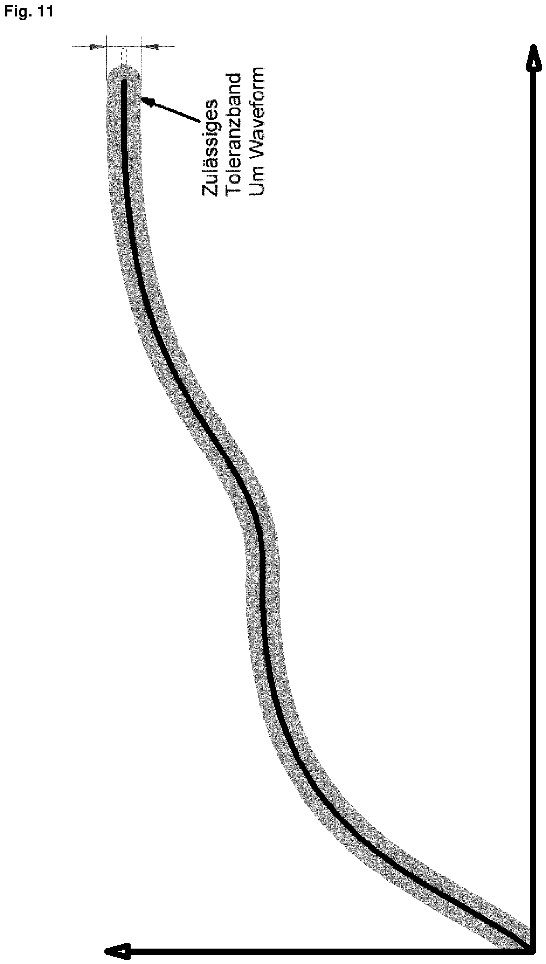

Fig. 11 zeigt eine Hüllkurvenkontrolle. Diese fortschrittliche Hüllkurvenkontrolle kann anstelle der bisherigen, einfachen Grenzwertkontrolle mit pro Phase definierten Min/Max-Werten nach folgendem Verfahren realisiert werden:
1. Mindestens ein Heizprogramm, welches den gewünschten Prozesstemperaturverlauf in guter Qualität erfüllt, wird manuell oder automatisiert eingerichtet. Die Grenzwerte der Prozesskontrolle können hierbei noch offen sein.
2. Nach Einrichtung wird mindestens ein programmierter Erwärmprozess ausgeführt, wobei vorzugsweise die in der Induktionseinheit integrierte Steuerung oder alternativ ein externes Rechensystem, wie beispielsweise die Ablaufsteuerung oder ein PC, an welches die Daten über die Schnittstelle übertragen werden, die zu überwachenden Prozessparameter, wie beispielsweise Leistung und Temperatur, oder auch andere Werte, wie Strom oder Spannung, mitschreibt. Dieser Mitschreibvorgang erfolgt vorzugsweise mit hoher Zeit- und Werteauflösung in Echtzeit, wobei bei Nutzung eines externen Rechensystems zum Mitschreiben die Daten in der induktionseinheitsinternen Steuerung gepuffert werden können.
3. Aus den mitgeschriebenen Daten bestimmt die integrierte Steuerung der Induktionseinheit oder alternativ ein externes Rechensystem, wie beispielsweise die Ablaufsteuerung oder ein PC, jeweils automatisiert die Hüllkurven, vorzugsweise in Form von Minimum- und Maximumkurven über die Zeit.
4. Vorzugsweise werden die ermittelten Kurven von der integrierten Steuerung der Induktionseinheit oder alternativ einem externen Rechensystem, wie beispielsweise der Ablaufsteuerung oder einem PC, über mathematische Verfahren, wie Mittelwertbildung, Glättung und Stützstellenbildung, in vereinfachte Funktionen mit geringerem Speicherbedarf umgerechnet. Die Vereinfachung erfolgt beispielsweise zu Punktefolgen mit geringerer Anzahl an Punkten oder zu Parametern zur Beschreibung von mathematischen Funktionen, wie beispielsweise Bezier-Approximationen.
5. Wenn die Toleranzermittlung nur mit einem einzelnen oder mit einer geringen Anzahl an Heizvorgängen ausgeführt wurde, ist es zur Berücksichtigung von statistischen Streuungen empfehlenswert, für Serienprozesse eine etwas größere Toleranz zuzulassen, als sie das System automatisch ermittelt hat. Hierzu erscheinen folgende Lösungen besonders geeignet:
   - Die Min/Max-Hüllkurven können um anwendungsspezifisch sinnvolle Werte nach unten oder nach oben geschoben und jeweils so angepasst gespeichert und genutzt werden.
   - Alternativ werden die Hüllkurven ohne Verschiebung beibehalten und zusätzlich werden Verschiebeparameter abgespeichert, was eine spätere Anpassung des Toleranzbands durch einfache Anpassung dieser Parameter erlaubt.
   - Diese Absenkung bzw. Anhebung kann in beiden Fällen beispielsweise additiv erfolgen oder auch multiplikativ z.B. als Prozentangabe.
   Alternativ ist es möglich, Heizprogramme zu erstellen und auszuführen, welche Erwärmprozesse ausführen, die sich an den gerade noch zulässigen Ober- bzw. Untergrenzen der betrachteten Parameter bewegen. Aus den hierbei mitgeschriebenen Daten lassen sich direkt nutzbare Hüllkurven bestimmen, welche vorzugsweise analog zu Punkt 4 vereinfacht werden. Diese sind ohne oder zur Erhöhung der Flexibilität auch mit toleranzerweiternden Verschiebeparametern nutzbar. Dieses Verfahren zeigt dem Anlagenbetrieber den Zusammenhang zwischen Toleranzband und Prozessauswirkung anschaulicher, erfordert jedoch einen deutlich höheren Zeitaufwand für die Einrichtung der verschiedenen Programme.
6. Die nach obigem Verfahren unvereinfacht oder vereinfacht ermittelten Daten zur Beschreibung der Hüllkurven ggf. mit Zusatzparametern zur Verschiebung werden vorzugsweise in den Heizprogrammen integriert oder daran angebunden in der Ablaufsteuerung gespeichert. Falls die Daten getrennt oder an anderen Orten gespeichert werden, ist zweckmäßigerweise ein Verfahren zu implementieren, welches bei Auswahl des Heizprogramms den Zugriff auf die zum Heizprogramm passenden Hüllkurven mit ihren Parametern erlaubt. Eine Erstellung, Bearbeitung oder Visualisierung der Hüllkurven ist vorzugsweise am Bedienpanel der Ablaufsteuerung, aber auch an anderen Geräten, wie z.B. einem externen PC, möglich. An diesen Geräten ist es in einer vorzugsweisen Ausgestaltung auch möglich, die Istverläufe von reellen Heizvorgängen innerhalb der Hüllkurve darzustellen, um dem Betreiber eine visuelle Darstellung über die Prozessqualität zu bieten.
7. Auswahl und Übertragung der im oben beschriebenen Prozess erzeugten Hüllkurvendaten erfolgen vorzugsweise gemeinsam mit der Auswahl und Übertragung des zugehörigen Heizprogramms. Hiernach ist eine kontinuierliche Prozesskontrolle unter Einsatz der Hüllkurven möglich.
   Bei Hüllkurvenbeschreibung mittels mathematischer Funktion wird vorab oder in Echtzeit während des Erwärmprozesses die Hüllkurve rekonstruiert. Insbesondere bei Nutzung vereinfachter Hüllkurvendaten ist es außerdem vorteilhaft, eine Interpolation vorzunehmen, so dass repräsentative Grenzwerte auch für Zeitpunkte zur Verfügung stehen, welche nicht in den Daten enthalten sind.
   Vorzugsweise erfolgen Rekonstruktion, Interpolation und die Überwachung der aktuellen Prozessparameter auf Verlassen der Hüllkurven in der induktionseinheitsinternen Steuerung. Alternativ ist es möglich, diese ganz oder teilweise von einem externen Rechensystem, wie beispielsweise der Ablaufsteuerung oder einem PC, ausführen zu lassen, was jedoch die erforderliche Bandbreite der Kommunikationsschnittstelle deutlich erhöht und die Echtzeitfähigkeit je nach Schnittstellentyp einschränkt.

Alternativ zur oben dargestellten Beschreibung mit Min/Max Kurven sind auch andere Beschreibung der Hüllkurven möglich, beispielsweise in Form von Mittelwert und Abweichung. Zur Erweiterung des Toleranzbands bietet sich hierbei eine additive oder multiplikative Spreizung der Abweichungskurve an, wobei auch in diesem Fall eine direkte Anpassung der Hüllkurve oder die Nutzung von Spreizungsparametern möglich ist.

Außerdem wäre ein Selbsteinstellverfahren nach folgendem Prinzip realisierbar:
1. Die einzurichtende Erwärmstelle einer Induktionsanlage wird zum Einrichten mit einem vorzugsweise wiederentfernbaren, also beispielsweise steckbaren, klemmbaren oder schraubbaren Temperatursensor ausgestattet, oder es wird ein mit Temperatursensoren versehenes Werkstück genutzt. Auch ein externes Messgerät, wie ein auf eine Lötanwendung eingerichtetes Pyrometersystem, ist einsetzbar. Der Sensor wird an dem System angeschlossen, welches den Ablauf der Heizprogramme steuert. Vorzugsweise ist dies die Induktionseinheit mit ihrer internen Steuerung, alternativ kommt auch ein externes Rechensystem, wie beispielsweise die Ablaufsteuerung oder ein PC, welches mit einem Temperatureingang ausgestattet ist, in Frage.
2. Ein Heizprogramm wird im Temperaturregelmodus auf den gewünschten Temperaturverlauf programmiert
3. Das Heizprogramm wird mindestens einmal unter realistischen Bedingungen ablaufen lassen.
4. Das von dem induktionseinheitsinternen Regler ermittelte Stellsignal an die Leistungselektronik, wie beispielsweise Strom oder Leistung, wird vorzugsweise von der in der Induktionseinheit enthaltenen Steuerungselektronik oder alternativ einem externen Rechensystem, wie beispielsweise der Ablaufsteuerung oder einem PC, an welches die Daten über die Schnittstelle übertragen werden, aufgezeichnet. Dieser Aufzeichnungsvorgang erfolgt vorzugsweise mit hoher Zeit- und Werteauflösung in Echtzeit, wobei bei Nutzung eines externen Rechensystems zum Mitschreiben die Daten in der induktionseinheitsinternen Steuerung gepuffert werden können.
5. Vorzugsweise wird der ermittelte Stellwertverlauf von der Steuerung in der Induktionseinheit oder alternativ einem externen Rechensystem, wie beispielsweise der Ablaufsteuerung oder einem PC, an welches die Daten über die Schnittstelle übertragen werden, über mathematische Verfahren wie Mittelwertbildung, Glättung und Stützstellenbildung in eine vereinfachte Funktion mit geringerem Speicherbedarf umgerechnet. Die Vereinfachung erfolgt beispielsweise zu Punktefolgen mit geringerer Anzahl an Punkten, oder zu Parametern zur Beschreibung einer mathematischen Funktion, wie beispielsweise einer Bezier-Approximation.
6. Der nach obigem Verfahren unvereinfacht oder vereinfacht ermittelte Stellwertverlauf wird als Sollwertverlauf vorzugsweise in den Heizprogrammen integriert oder daran angebunden in der Ablaufsteuerung gespeichert. Falls die Daten getrennt oder an anderen Orten gespeichert werden, ist zweckmäßigerweise ein Verfahren zu implementieren, welches bei Auswahl des Heizprogramms den Zugriff auf den zum Heizprogramm passenden Sollwertverlauf erlaubt. In einer besonders vorteilhaften Ausgestaltung werden die Daten durch einen automatischen Algorithmus so vereinfacht und in Abschnitte geteilt, dass sie in Form von im Klartext lesbaren Energiephasen in den Heizprogrammen abgelegt werden können. Die Interpretation und spätere Anpassung durch den Anlagenbetreiber ist hierbei besonders intuitiv. Eine Erstellung, Bearbeitung oder Visualisierung der Sollwert-Wellenform, der vereinfachten Wellenform oder der Heizprogramme mit ihren Energiephasen ist vorzugsweise am Bedienpanel der Ablaufsteuerung, aber auch an anderen Geräten wie z.B. einem externen PC, möglich. An diesen Geräten ist es in einer vorzugsweisen Ausgestaltung auch möglich, die Istverläufe von reellen Heizvorgängen sowie den Sollwertverlauf darzustellen, um dem Betrieber eine visuelle Darstellung über die Prozessqualität zu bieten.
7. Nach diesem Einrichten kann der Prozess ohne Temperatursensor im Energiemodus unter Zugrundelegung der Daten wie beispielsweise der Sollwert-Wellenform oder der Heizphasen ausgeführt werden. Der Sensor kann entfallen oder er bleibt noch zum Zweck der manuellen Feinanpassung, Prozessüberwachung oder Qualitätssicherung erhalten, sofern es sich um einen an der Induktionseinheit angebauten Sensor handelt.

Mit diesem Verfahren ist es möglich, mit geringerem Zeitaufwand als nach dem Stand der Technik mehrere Heizprogramme beispielsweise für verschiedene Temperaturniveaus oder Prozesse zu erstellen.

Anstelle eines Sensors kann eine Mehrzahl an Sensoren zum Einsatz kommen, deren Signale zu einem repräsentativen Gesamtsignal zusammengerechnet werden, wodurch aus deren Einzelmesswerten ein repräsentativer Gesamttemperaturwert zur automatisierten Einstellung bestimmt wird. Mehrere Induktionsstellen können während des Lernvorgangs und/oder des späteren Betriebs beispielsweise leistungsproportional oder leistungsidentisch gebündelt werden. Dies ermöglicht beispielsweise die Anwendung auf großen Werkstücken oder die Erwärmung dickerer Werkstoffschichten von mehreren Seiten.

Gegenüber der deutschen Offenlegungsschrift DE 10 2012 002 404 A1, die ein automatisches Selbsteinstellungsverfahren zur Einrichtung der Heizleistungen der Induktionseinheiten einer Induktionsklebeanlage unter Schutz stellt, umfassend die Schritte:
A) Einlegen der zu klebenden Bauteilkomponenten in eine Gelierstation der Induktionsklebeanlage zur Ausführung des Multispotbonding-Verfahrens, die in leistungsgleiche Gruppen eingeteilte Induktionseinheiten umfasst, wobei zumindest ein Bauteil-Temperatursensor jeder Gruppe zugeordnet ist,
B) Abgleichen der Induktionseinheiten innerhalb jeder Gruppe aufeinander,
C) Bestimmen der Prozessparameter aus der Gruppe umfassend die Leistungsparameter für zumindest eine Aufheizphase und eine Haltephase für die Induktionseinheiten jeder Gruppe bei einer vorgegebenen Aufheizzeit, einer dabei zu erreichenden Geliertemperatur und eines während der Haltephase einzuhaltenden Toleranzbands um eine vorgegebene Haltetemperatur, durch automatisches Ausführen und Überwachen einer Mehrzahl von Heizzyklen mittels eines Programmiersystems, das eine Recheneinheit zum Speichern, Verarbeiten und Verwalten der Prozessparameter zu einem Prozessprogramm, einen mit dem Bauteil-Temperatursensor verbundenen Messverstärker mit Signalausgabe an die Recheneinheit und einen Programmieradapter zum Verbinden eines Generators der Induktionsklebeanlage mit der Recheneinheit umfasst, oder mittels eines internen, in den Generator implementierten Programmiersystems,
unterscheidet sich dieses erfindungsgemäße System insbesondere in folgenden Punkten:
- Arbeitsschritt B entfällt, da durch die individuelle Steuerung jeder Induktionseinheit keine Gruppen vorliegen
- Aufgrund der Wellenformermittlung im Temperaturregelmodus wird nur ein einzelner Heizzyklus benötigt, um die Parameter zur Programmerstellung zu ermitteln. Gemäß der deutschen Offenlegungsschrift DE 10 2012 002 404 A1 muss eine Mehrzahl an Erwärmprozessen mit jeweils angepassten Parametern durchgetestet werden, bis nach langer Zeit geeignete Parameter gefunden sind.

An Hauptanwendungsgebieten für die erfindungsgemäße Induktionsanlage bzw. das erfindungsgemäße Verfahren zum Betreiben einer Induktionsanlage ist aktuell die Herstellung von Verbindungen zwischen einzelnen Werkstücken vorgesehen, wie beispielsweise:
- Verklebung der Bördelränder zwischen Außenhaut und Struktur von Karosserieanbauteilen, wie Motorhauben, Türen usw.
- Verkleben von Einzelkomponenten an größeren Strukturelementen, wie beispielsweise Schiebedachelemente an Karosserien.
- Verlöten von Rohren mit Fittings und Haltern.
- Aufschrumpfen von Zahnrädern, Nocken, Geberrädern usw. auf Wellen.

Die erfindungsgemäße Induktionsanlage ist jedoch auch allgemein für vorzugsweise punktuelle Erwärmverfahren geeignet, wie beispielsweise:
- Lösen von festsitzenden Verbindungen.
- Partielle Erwärmung von Werkstücken zur Umformung.
- Einbrennen von Lacken.
- Demontage von verklebten Verbindungen zum Recycling.

Die erfindungsgemäße Induktionsanlage bzw. das erfindungsgemäße Verfahren zum Betreiben einer Induktionsanlage weisen unter anderem folgende Vorteile gegenüber dem Stand der Technik auf:
- Die Anzahl der Erwärmstellen kann praktisch beliebig groß sein, sie ist lediglich begrenzt durch die Adressierung und die Datentransferrate des eingesetzten Kommunikationssystems.
- Jede Erwärmstelle kann einzeln und unabhängig angesteuert und geregelt werden. Dies beschleunigt die Inbetriebnahme und führt zu einem optimalen Temperaturniveau mit optimaler Prozessqualität.
- Die Qualitätssicherung bzw. Protokollierung der Prozessparameter, wie Energiewerte, ist individuell für jede einzelne Erwärmstelle möglich, so dass auch kleine Abweichungen erkannt werden.
- Der Verkabelungsaufwand ist minimal und mit vorkonfektionierten Kabeln möglich.
- Da nur Gleichspannung oder Netzspannung anstelle der Mittelfrequenzsignale zu übertragen ist, können preiswerte Standardkabel eingesetzt werden.
- Die Signale zu den Induktionseinheiten sind einfach durch trennbare Steckverbinder/Dockingstationen zu führen. Dies ermöglicht manuelle oder automatisierte Stationsumschaltungen wie auch manuelle oder automatisiert umrüstbare Werkzeugsätze.
- Die vereinfachte Schnittstelle macht das System besonders geeignet auch für Einsatz am Roboter. Hierbei ist eine feste Montage ebenso möglich wie auch ein automatisierter oder manueller Wechsel von Werkzeugträgern mit darauf montierten Induktionseinheiten und optional auch darauf montierten Werkstückaufnahmen.
- Die Verlegung der Kabel kann auch direkt auf Stahl erfolgen, da sie keine Mittelfrequenz führen, welche umliegende Anlagenteile erwärmen würde.
- Durch die moderne Technik ist bei vergleichbaren Stückzahlen eine Preisreduktion möglich.
- Das System kann auch für viele andere Anwendungen eingesetzt werden, bei denen einzeln regelbare Leistungen benötigt werden.

Alle in der Beschreibung, den nachfolgenden Ansprüchen und der Zeichnung dargestellten Merkmale können sowohl einzeln als auch in beliebiger Kombination miteinander erfindungswesentlich sein.

### Abkürzungs- und Bezugszahlenliste

- P: Drucksensor oder alternativ Durchflusswächter
- F: Netzeingangssicherung
- L: Netzfilter
- D: Eingangsgleichrichter
- PSU: Netzteil (Power supply unit)
- RD: Shuntwiderstand oder Strommesswandler
- CD: Zwischenkreiskondensator
- Cres: Resonanzkondensator, kann bei Dreieckstrom entfallen
- Ind: Induktionsschleife oder Induktionsspule
- TR: Ausgangstransformator
- TT: Temperatursensor
- T1: Schalttransistoren Wechselrichter
- T2: Schalttransistoren Wechselrichter
- T3: Schalttransistoren Wechselrichter
- T4: Schalttransistoren Wechselrichter
- TI: Temperatursensor
- Drv1: Treiber für Schalttransistoren
- Drv2: Treiber für Schalttransistoren
- TC: Temperatursensor
- RA: Shuntwiderstand oder Strommesswandler
- ADC: Analog/Digital-Wandler
- µC: Steuerungssystem
- PHY: Medienkonverter für Busansteuerung
- SPS: Speicherprogrammierte Steuerung oder ein sonstiger Prozessrechner

- 1: Kombistecker
- 2: Ethernet-Schnittstelle
- 3: Versorgung
- 4: Kühlung
- 5: Kreuzbandfühler
- 6: Thermobändchen

## Patentansprüche

1. Induktionsanlage,
- mit mindestens einer Induktionseinheit, die eine Induktionsspule aufweist, deren Heizleistung regelbar ist,
- mit einer Steuerungselektronik zur Regelung der Heizleistung einer Induktionsspule,
- mit einer Leistungselektronik, umfassend insbesondere Frequenzumrichter, zur Versorgung einer Induktionseinheit,
**dadurch gekennzeichnet,**
**dass** die Steuerungselektronik und die Leistungselektronik in und/oder an der Induktionseinheit angeordnet sind.

2. Induktionsanlage, nach Anspruch 1,
**dadurch gekennzeichnet,**
**dass** die Induktionseinheit mindestens eine Kommunikationsschnittstelle aufweist.

3. Induktionsanlage, nach Anspruch 1 oder Anspruch 2,
**dadurch gekennzeichnet,**
**dass** die Induktionseinheit mindestens eine Kühlung aufweist.

4. Induktionsanlage, nach einem der vorhergehenden Ansprüche,
**dadurch gekennzeichnet,**
**dass** eine Verkabelung von mehreren Induktionseinheiten reihen-, ring und/oder sternförmig ist.

5. Induktionsanlage, nach einem der vorhergehenden Ansprüche,
**dadurch gekennzeichnet,**
**dass** die Induktionsanlage mindestens einen Verteiler aufweist.

6. Induktionsanlage, nach einem der vorhergehenden Ansprüche,
**dadurch gekennzeichnet,**
**dass** die Induktionsanlage mindestens eine Ablaufsteuerung aufweist.

7. Induktionsanlage, nach einem der vorhergehenden Ansprüche,
**dadurch gekennzeichnet,**
**dass** die Induktionsanlage mindestens ein Not-Aus-Konzept aufweist.

8. Induktionsanlage, nach einem der vorhergehenden Ansprüche,
**dadurch gekennzeichnet,**
**dass** mindestens eine Induktionseinheit nebst ihrer Induktionsspule und/oder mindestens eine Induktionseinheit nebst ihrer Induktionsspule und einer Werkstückaufnahme auf einem Werkzeugträger montiert ist.

9. Induktionsanlage, nach einem der vorhergehenden Ansprüche,
**dadurch gekennzeichnet,**
**dass** mindestens eine Induktionseinheit oder ein mindestens eine Induktionseinheit aufweisender Werkzeugträger auf einem Roboter oder einem allgemeinen Handlingsystem angeordnet ist.

10. Verfahren zum Betreiben einer Induktionsanlage, wobei die Induktionsanlage mindestens eine Induktionseinheit, die eine Induktionsspule aufweist, deren Heizleistung regelbar ist, und eine Steuerungselektronik zur Regelung der Heizleistung einer Induktionsspule und eine Leistungselektronik, umfassend insbesondere Frequenzumrichter, zur Versorgung einer Induktionseinheit, aufweist,
**dadurch gekennzeichnet,**
**dass** die Steuerungselektronik und die Leistungselektronik in und/oder an der Induktionseinheit angeordnet sind, wodurch die Heizleistung einer Induktionsspule einzeln und unabhängig angesteuert und geregelt werden kann.

11. Verfahren, nach Anspruch 10,
**dadurch gekennzeichnet,**
**dass** zum Entnehmen mindestens einer Induktionseinheit aus der Induktionsanlage mindestens eine Induktionseinheit nebst ihrer Induktionsspule und/oder mindestens eine Induktionseinheit nebst ihrer Induktionsspule und einer Werkstückaufnahme auf einem Werkzeugträger montiert ist.

12. Verfahren, nach Anspruch 10 oder Anspruch 11,
**dadurch gekennzeichnet,**
**dass** die Heizleistung einer Induktionsspule durch eine Kontrolle der Grenzwerte oder durch eine Hüllkurvenkontrolle kontrolliert wird.

13. Verfahren, nach einem der Ansprüche 10 bis 12,
**dadurch gekennzeichnet,**
**dass** ein Temperaturverlauf durch mindestens einen Temperatursensor überwacht wird.

14. Verfahren, nach einem der Ansprüche 10 bis 13,
**dadurch gekennzeichnet,**
**dass** mindestens ein Temperatursensor zur Stellwertsermittlung eingesetzt wird.

15. Verfahren, nach Anspruch 14,
**dadurch gekennzeichnet,**
**dass** die ermittelten Stellwerte als Sollwerte in Form eines Heizprogramms oder einer mathematischen Funktion oder einer Punktefolge abgelegt werden.

16. Verfahren, nach einem der Ansprüche 10 bis 15,
**dadurch gekennzeichnet,**
**dass** ein Temperaturverlauf einer Induktionseinheit durch Stellwerte beeinflusst wird, die durch ein Heizprogramm oder eine mathematische Funktion oder eine Punktefolge vorgegeben werden.

17. Verfahren, nach einem der Ansprüche 10 bis 16,
**dadurch gekennzeichnet,**
**dass** als Induktionsanlage eine Induktionsanlage, nach einem der Ansprüche 1 bis 9, eingesetzt wird.
